Europäisches Patentamt

European Patent Office

Office européen des brevets

(19)

(11) Numéro de publication: **0 006 073**
**B1**

(12) **FASCICULE DE BREVET EUROPEEN**

(45) Date de publication du fascicule de brevet: **15.07.81**

(21) Numéro de dépôt: **79430012.9**

(22) Date de dépôt: **01.06.79**

(51) Int. Cl.³: **B 65 G 33/18,**
**B 65 G 47/19, B 29 F 1/06**

(54) **Extracteur doseur pour produits pulvérulents.**

(30) Priorité: **02.06.78 FR 7817241**

(43) Date de publication de la demande:
**12.12.79 Bulletin 79/25**

(45) Mention de la délivrance du brevet:
**15.07.81 Bulletin 81/28**

(84) Etats Contractants Désignés:
**AT BE CH DE FR GB IT LU NL SE**

(56) Documents cités:
**DE - A - 2 358 965**
**DE - C - 554 996**

(73) Titulaire: **TRANSITUBE PROJET Société anonyme dite:**
**Jolibois la Blaque Chemin de la Blaque**
**F-13100 Aix-en-Provence (FR)**

(72) Inventeur: **Conca, Gilbert G.**
**Quartier du Gay - Calas**
**F-13480 Cabries (FR)**

(74) Mandataire: **Moretti, René et al,**
**C/O Cabinet BEAU DE LOMENIE 14, rue Raphael**
**F-13008 Marseille (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Extracteur-doseur pour produits pulvérulents

La présente invention a pour objet un dispositif extracteur-doseur pour produits pulvérulents.

Le secteur technique de l'invention est celui des appareillages utilisés pour la manipulation des produits pulvérulents.

On connaît déjà des doseurs à vis sans fin pour extraire des produits pulvérulents d'une trémie. Certains de ces doseurs comportent une vis montée à rotation dans un conduit, l'entraînement de la vis est généralement provoqué par un moto-réducteur, le dosage étant obtenu en ajustant la vitesse de rotation de la vis. De par leur conception, de tels doseurs sont d'un prix de revient relativement élevé.

D'autres doseurs d'un autre type comportent une vis sans fin entraînée à vitesse constante et le dosage est réalisé en réglant l'ouverture de l'admission; ces doseurs présentent des inconvénients: des difficultés sont rencontrées en cours d'utilisation lorsqu'il s'agit de doser des produits pulvérulents s'écoulant difficilement. Des voûtes se créent au niveau de l'admission et la circulation de produit dans le conduit se trouve ainsi interrompue.

On connaît aussi des doseurs comportant deux vis montées concentriquement et entraînées séparément à des vitesses de rotation différentes choisies en fonction des caractéristiques des produits à doser. Dans de tels appareils, les vis sont à pas de même sens et celle ayant le plus grand diamètre dite "vis d'extraction" homogénéise le produit en lui donnant une densité uniforme et alimente la vis de plus petit diamètre dite "vis de dosage", laquelle distribue le produit à la sortie du conduit de distribution.

Ces doseurs évitent les effets de voûte précédemment cités mais sont d'une conception onéreuse.

On connaît également un dispositif ayant fait l'objet d'une demande de brevet allemande publiée sous le No 2 358965 et comportant deux vis coaxiales à pas de sens inversé. Dans ce dispositif, les vis sont des hélices qui s'enroulent autour d'un arbre. De telles vis tournant à faible vitesse ne sont pas adaptées pour permettre au dispositif de continuer à fonctionner en cas de bourrage du produit au niveau de l'orifice de distribution. Elles n'évitent pas les effets de voûte au droit de la trémie. De plus, il ne s'agit pas d'un dispositif doseur d'un produit pulvérulent, mais d'une machine à semer.

La présente invention vise à remédier à ces inconvénients.

L'objectif à atteindre est un dispositif-doseur d'une conception simple, permettant de doser efficacement tous produits pulvérulents de diverses caractéristiques quelle que soit leur densité, leur granulométrie ou leur humidité . . .

Cet objectif est atteint par le dispositif extracteur-doseur pour produits pulvérulents selon l'invention comportant une trémie et des vis coaxiales, à pas de sens inversé, entraînées en rotation dans un conduit cylindrique, lesquelles vis sont séparées l'une de l'autre par la paroi d'un tube, coaxial aux vis et au conduit, la vis de plus petit diamètre tournant à l'intérieur du tube, pour véhiculer dans celui-ci le produit dans un sens et celle, de plus grand diamètre tournant à l'extérieur dudit tube pour véhiculer le produit dans le sens opposé, dans l'espace délimité entre le tube et le conduit, celui-ci comportant à sa périphérie au moins un orifice par lequel s'écoule le produit, caractérisé en ce que lesdites vis sont réalisées à partir de fils enroulés en spirale à la manière d'un ressort, et en ce que le tube, dans lequel est montée la vis de plus petit diamètre, qui est la vis d'extraction, comporte à sa périphérie et du côté de la trémie, une ouverture d'admission du produit, devant laquelle s'étendent au moins en partie lesdites vis, lequel produit, après qu'il ait traversé ledit tube, est repris par la vis de plus grand diamètre et est transporté en sens inverse, et à l'extérieur du tube, du côté de la trémie pour exercer une pression constante au niveau de l'admission, dans le but d'éviter les effets de voûte au-dessus de l'ouverture d'admission et simultanément faire passer le produit par un orifice situé à la périphérie du conduit.

Le résultat de l'invention est un dispositif doseur pour produits pulvérulents se présentant sous diverses formes: poudres de diverses granulémétries, paillettes au autres, quel que soit leur degré d'humidité.

La conception de ces appareils est d'une grande simplicité. Les vis sont entraînées à la même vitesse au moyen d'un moteur ou d'un moto-réducteur fonctionnant à vitesse constante. Compte tenu de la disposition coaxiale des deux vis, dont les pas sont de sens inversé, on établit une circulation du produit dans le conduit en circuit fermé. La conception de ce doseur a pour effet d'éviter le bourrage au niveau de l'admission, la grosse spire exerçant une pression constante au niveau de l'admission du produit. Il procure la possibilité de laisser le dispositif en fonctionnement si pour une raison quelconque l'orifice de distribution du produit est obturé. La vis de plus grand diamètre crée une pression dynamique dans le conduit, laquelle tend à éviter les effets de voûte qui sont fréquents dans les appareillages n'ayant qu'une seule vis. La vis de plus petit diamètre extrait le produit mis en charge au-dessus du doseur, et le déplace dans le tube central dans le sens admission/extrémité libre dudit tube, le produit est alors repris par la grande vis qui le déplace en sens inverse dans le conduit de section annulaire délimitée par la paroi du tube central et par l'enveloppe extérieure du conduit, dans le sens extrémité libre du tube central/admission. Le dosage du produit peut être effectué de diverses manières. On peut régler l'ouverture de l'obturateur de l'admission, le règlage se faisant en fonction de la section de l'orifice d'écoulement du produit qui se trouve à la périphérie et à la partie inférieure du conduit. On peut encore utiliser une vanne télécommandée, par exemple une vanne électro-magnétique, pneumatique ou autre, reliée à un système de temporisation, laquelle vanne ouvre la section d'écoulement pendant des espaces de temps se reproduisant à des fréquences réglées par ledit dispositif de temporisation. On peut aussi régler le débit du produit par déplacement latéral en rotation, de l'orifice d'écoulement en faisant pivoter le conduit autour de son axe de révolution, de telle sorte que tout ou partie de la section de l'orifice d'écoulement soit masquée par la nappe de produit véhiculé à la partie inférieure du conduit.

On prévoit également de régler le débit du produit en le faisant passer par une fente s'étendant le long des génératrices du conduit, et située sensiblement sur le parcours du produit, cette fente pouvant être en tout ou partie obturée par une tôle cintrée destinée à se déplacer au droit de la fente et constituant ainsi une vanne.

Dans cette conception, le dispositif selon l'invention peut être utilisé en dispositif saupoudreur.

D'autres avantages et particularités de l'invention ressortiront encore à la lecture de la description suivante uniquement donnée à titre d'exemple non limitatif en référence au dessin annexé sur lequel:

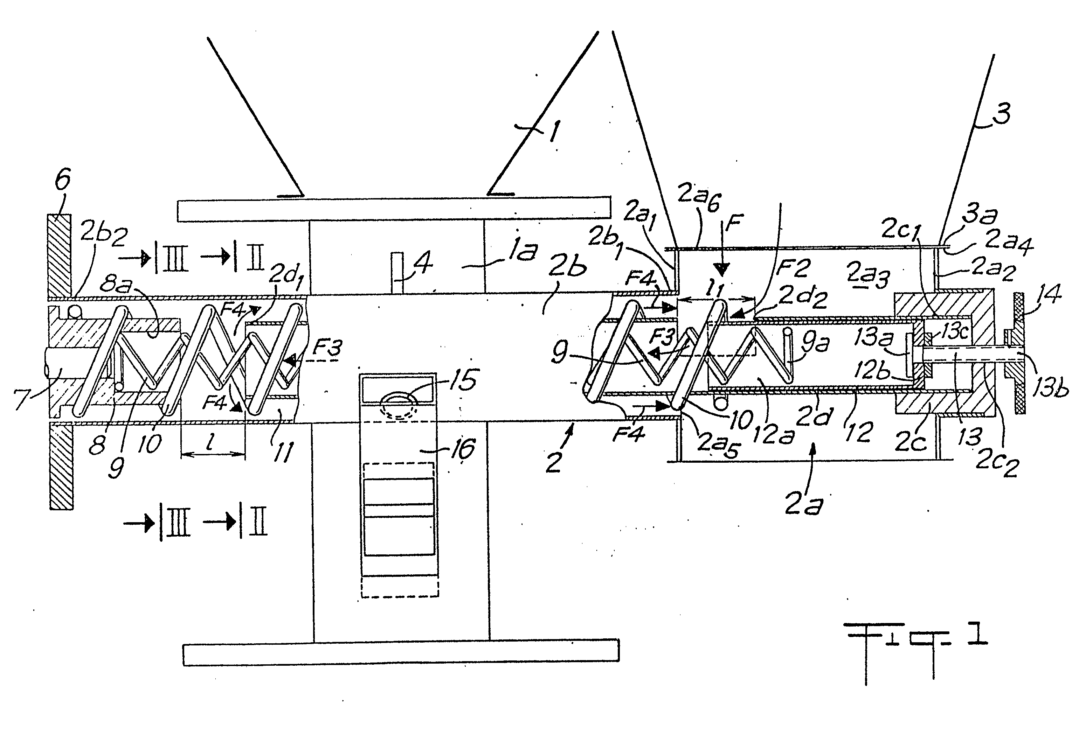

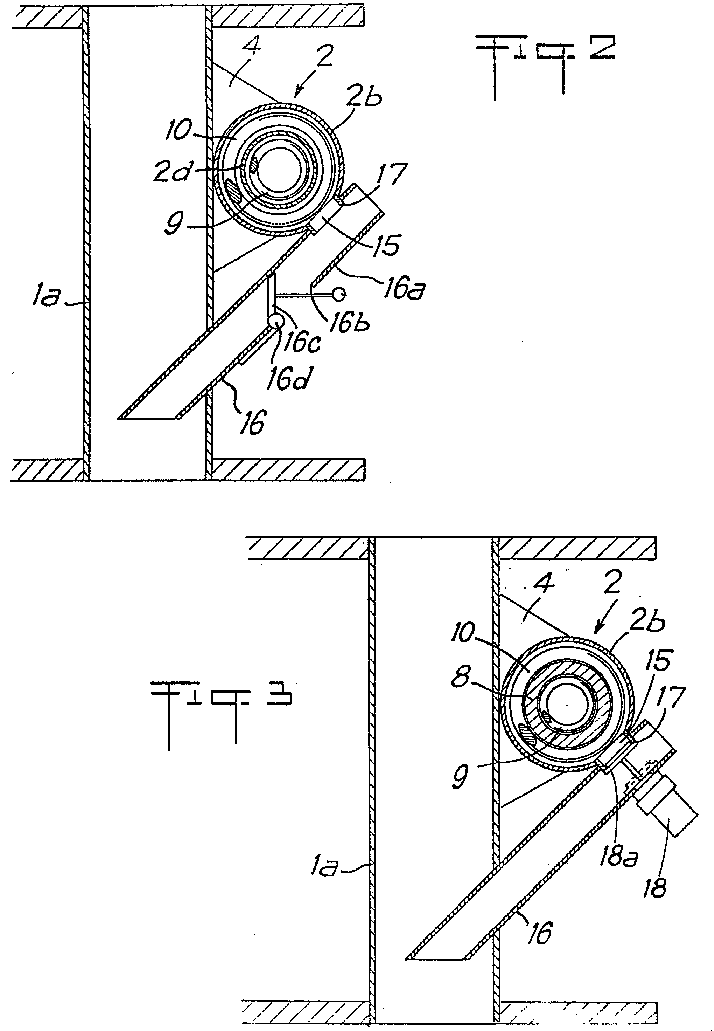

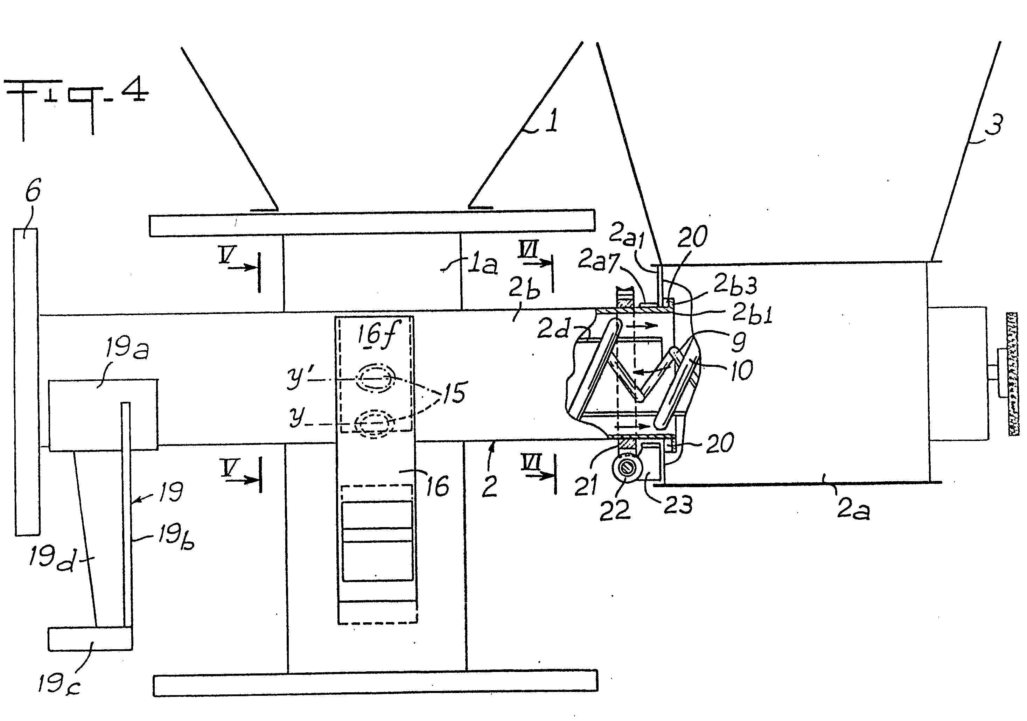

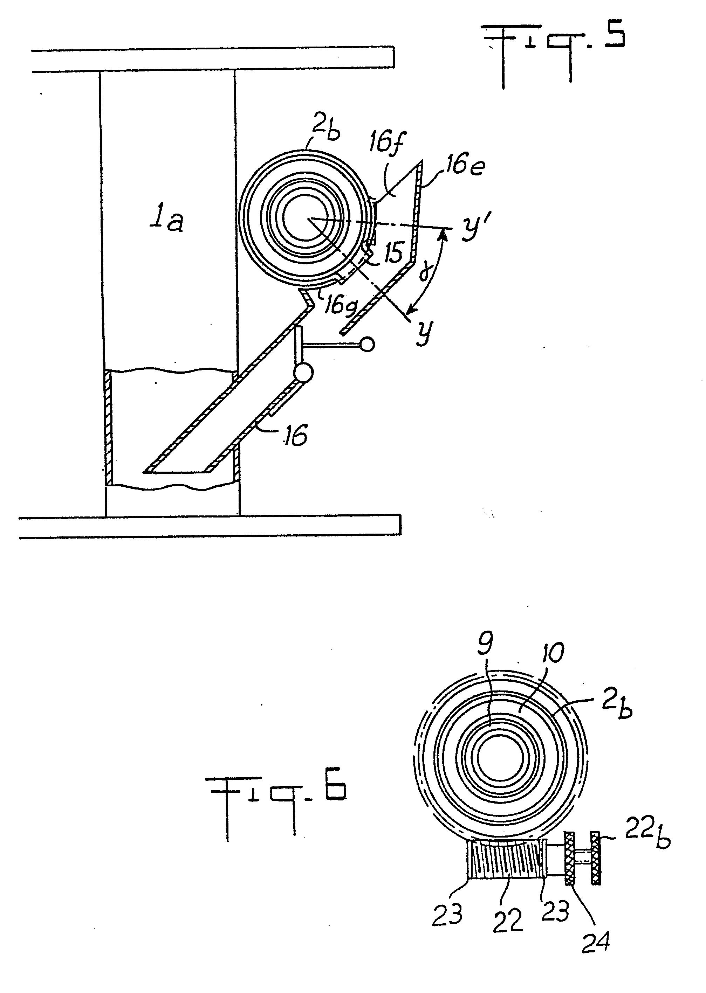

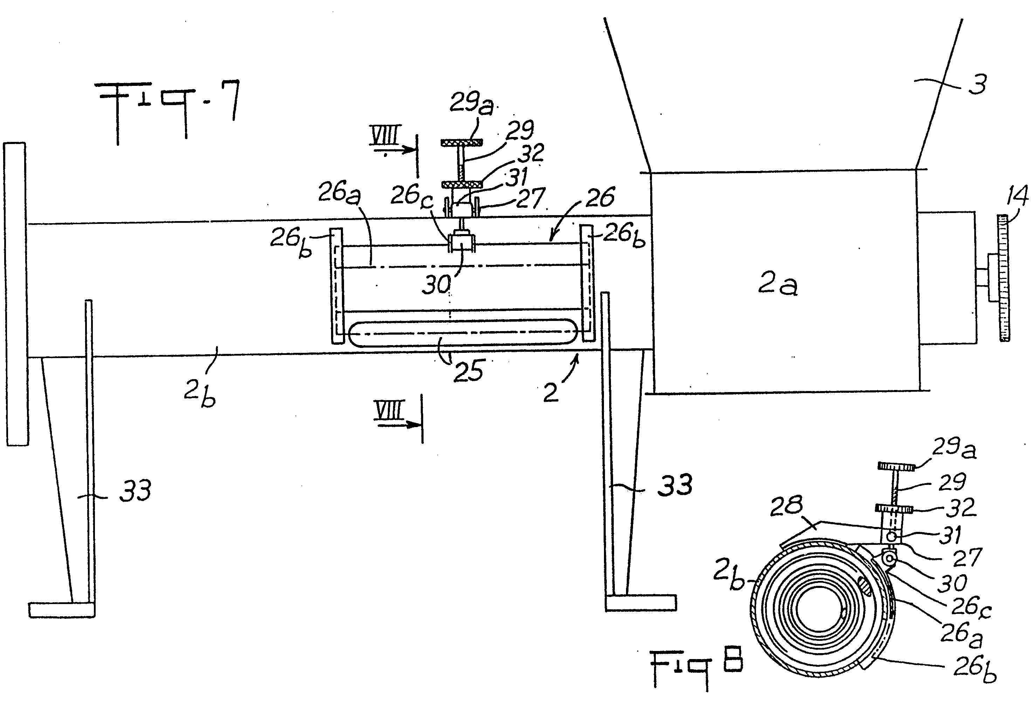

La figure 1 est une vue en coupe longitudinale schématique d'un dispositif doseur selon l'invention comportant un orifice d'écoulement fixe de section circulaire; la figure 2 est une vue en coupe schématique suivant II II de la figure 1; la figure 3 est une vue en coupe schématique suivant III III d'un doseur comportant un dispositif automatique de dosage temporisé; la figure 4 est une vue extérieure en élévation/coupe partielle schématique d'un dispositif selon l'invention dans lequel le réglage du débit du produit est obtenu par pivotement du conduit et déplacement de l'orifice d'écoulement par rapport à la nappe de produit; la figure 5 est une vue en coupe schématique suivant V V de la figure 4; la figure 6 est une vue en coupe schématique suivant VI VI de la figure 4; la figure 7 est une vue extérieure en élévation d'un dispositif selon l'invention dans lequel le produit pulvérulent s'écoule par une fente longitudinale dont la section est modifiable au moyen d'une vanne; la figure 8 est une vue en coupe schématique suivant VIII VIII de la figure 7.

On se reporte d'abord aux figures 1 et 2 du dessin qui illustrent un mode de réalisation d'un doseur selon l'invention dont le produit dosé, par exemple un colorant, est admis dans la chambre de mélange la d'une cuve 1, contenant par exemple une résine.

Le doseur 2 est disposé au-dessous d'une trémie 3, remplie de colorant, laquelle se trouve à proximité de la cuve 1. Le doseur 2 est ainsi dans une position horizontale et est fixé d'une part à la trémie 3 et d'autre part à la chambre la de la cuve 1 par l'intermédiaire d'un support 4, en l'occurence un gousset fixé au doseur et à la chambre la par soudure.

Le doseur selon l'invention 2 se compose d'une partie en forme d'auge 2a, destinée à venir au-dessous de la trémie 3 et d'une enveloppe cylindrique 2b s'étendant horizontalement à partir de l'auge 2a, du côté de la chambre 1a de la cuve 1. Tel que cela est représenté sur le dessin, l'ouverture de l'auge 2a située à sa partie supérieure est de la même section que celle de l'orifice inférieur de la trémie 3.

L'auge 2a se compose de deux parois d'extrémités parallèles entre elles $2a_1/2a_2$, et d'une paroi latérale formant enveloppe $2a_3$. La fixation de l'auge à la trémie 3 est réalisée au moyen de deux brides $3a/2a_4$ fixées à la périphérie de l'orifice inférieur de la trémie et de l'ouverture supérieure de l'auge, lesquelles brides sont assemblées l'une à l'autre au moyen de boulons, par exemple au nombre de huit.

La paroi $2a_1$ comporte une ouverture circulaire $2a_5$ à partir de laquelle s'étend l'enveloppe cylindrique 2b. Celle-ci est engagée par son extrémité $2b_1$ dans l'ouverture $2a_5$ et est soudée à la paroi $2a_1$ de telle sorte que l'enveloppe 2b et la paroi $2a_1$ sont perpendiculaires.

La paroi $2a_2$ comporte, dans le prolongement de l'enveloppe 2b, une douille cylindrique 2c fixée à ladite paroi, par exemple par soudure. La douille 2c comporte, du côté s'étendant dans l'auge 2a, un logement cylindrique $2c_1$ dans lequel est encastré un tube cylindrique 2d.

La disposition de la douille 2c est telle par rapport à l'enveloppe 2b que cette dernière, la douille 2c et le tube 2d sont coaxiaux.

Le tube 2d s'étend à l'intérieur de l'auge et sur une partie de l'enveloppe 2b. Tel que l'illustre le dessin, le tube 2d s'étend dans l'enveloppe 2b sur environ les deux tiers de la longueur de cette dernière.

L'extrémité $2b_2$ de l'enveloppe 2b comporte une bride 6 fixée par soudure, laquelle a pour fonction d'assurer la fixation d'un moteur ou d'un moto-réducteur dont seulement l'arbre de sortie 7 est représenté sur le dessin.

Sur cet arbre de sortie 7, lequel est coaxial au tube 2d et à l'enveloppe 2b, est calé un manchon cylindrique 8, lequel comporte un logement cylindrique 8a débouchant du côté et à une distance 1, par exemple 30 mm de l'extrémité libre $2d_1$ du tube 2d. Dans ledit logement 8a qui est coaxial à l'enveloppe 2b et au tube 2d, est engagée forcée une vis sans fin 9.

Ladite vis s'étend à l'intérieur du tube 2d et son extrémité libre 9a aboutit environ au centre de l'auge 2a.

Autour du manchon 8 est également engagée forcée une deuxième vis sans fin 10, coaxiale à la vis 9. Cette vis 10 est ainsi d'un diamètre supérieur à la vis 9 et s'étend dans le conduit annulaire 11 délimité par la paroi du tube 2d et par l'enveloppe cylindrique 2b, pour aboutir dans l'auge 2a à une faible distance de l'orifice $2a_5$ par exemple 22 mm.

Ces vis 9/10 sont réalisées à partir de fils d'acier à ressort de section circulaire ou carrée et le sens de leur pas est inversé. La vis 9 est par exemple d'un pas "à droite", la vis 10 est d'un pas "à gauche".

L'extraction du produit contenu dans la trémie 3 est réalisée par la vis 9, à l'intérieur du tube 2d. Le produit est admis dans ledit tube par un orifice d'admission $2d_2$. Cet orifice $2d_2$ est réalisé en enlevant une partie de la paroi du tube 2d après avoir sectionné, jusqu'à son diamètre, celui-ci, suivant deux plans parallèles entre eux et perpendiculaires à l'axe du tube. Ainsi obtenu, l'orifice est, vu en projection suivant la flèche F, d'un contour rectangulaire. Au-dessus de cet orifice, est fixée un paroi $2a_6$ obstruant en partie l'ouverture d'entrée de l'auge 2a. Cette paroi joue le rôle d'un déflecteur pour forcer le produit à être admis dans l'orifice $2d_2$ par le côté et éviter ainsi toute surcharge sur la vis 9.

La réglage de l'ouverture de l'orifice d'admission $2d_2$ est réalisé au moyen d'un obturateur 12.

Cet obturateur 12 est cylindrique et creux. Il est réalisé par exemple à partir d'un tube d'un diamètre extérieur légèrement inférieur au diamètre interne du tube 2d afin qu'il puisse se déplacer librement dans celui-ci.

Une de ses extrémités 12a reçoit l'extrémité 9a de la vis 9. Celle-ci qui est d'un plus petit diamètre que le diamètre interne de l'obturateur peut ainsi tourner librement dans celui-ci. Son autre extrémité 12b est obstruée par une paroi percée en son centre pour laisser le passage à un axe cylindrique 13. Cet axe comporte un épaulement 13a venant en butée sur la paroi 12b et est lisse au droit de celle-ci pour pouvoir tourner librement. L'axe 13 est fileté sur une partie de sa longueur allant de ladite partie lisse à son extrémité s'étendant vers l'extérieur de l'auge et coopère ainsi avec un orifice taraudé $2c_2$ pratiqué au centre de la douille fixe 2c. Un organe de préhension, par exemple un bouton moleté 14, est fixé à son extrémité libre 13b. Une butée 13c, fixée à l'axe 13 insère la paroi 12b de l'obturateur 12 avec un léger jeu en coopérant avec l'épaulement 13a. On comprend que lorsque l'on tourne le bouton moleté 14, on déplace en translation sans l'entraîner en rotation, l'obturateur 12 dont la course est égale à la longueur $1_1$ de l'orifice d'admission $2d_2$.

L'orifice d'écoulement 15 du produit dosé est situé à la péripérie de l'enveloppe 2b, du côté de sa partie inférieure et environ à mi-longueur de ladite enveloppe.

Ledit orifice 15 débouche dans une goulotte d'écoulement 16 qui est par exemple d'une section rectangulaire, laquelle goulotte est inclinée et pénètre (fig. 2) à l'intérieur de la chambre 1a de la cuve 1.

L'orifice 15 est incliné à 45° par rapport au plan vertical passant par l'axe longitudinal du doseur, l'inclinaison de la goulotte 16 est fonction de l'angle d'écoulement du produit dosé.

Afin d'obtenir le dosage exact du produit, on adapte l'ouverture de l'orifice d'admission $2d_2$ en fonction de la section de l'orifice 15. Pour ce faire, on dispose d'un jeu de buses calibrées 17 adaptables au droit de l'orifice d'écoulement du produit.

La goulotte 16 comporte un dispositif de contrôle de débit. Elle comporte ainsi sur sa paroi 16a, sur laquelle s'écoule le produit dosé, une ouverture rectangulaire 16b. Cette ouverture 16b peut être masquée par un volet 16c articulé en 16d le long d'un des bords de l'ouverture 16b autour d'un axe parallèle à l'axe du doseur. Ce volet est à deux positions de telle sorte que dans l'une il peut être rabattu contre la paroi 16a et ainsi masquer l'ouverture 16b, permettant l'écoulement du produit dans la goulotte 16, et dans l'autre, figurée sur le dessin à la figure 2, il peut être en position relevée de manière à masquer la section de ladite goulotte et à libérer l'ouverture 16. Le produit s'écoulant alors par celle-ci peut être prélevé et, en fonction du temps d'écoulement, on peut déterminer la quantité de produit dosé.

Selon un autre mode de réalisation, illustré à la figure 3, le dosage du produit est obtenu au moyen d'un dispositif automatique.

Dans un tel doseur, l'orifice 15 est d'une section déterminée, par exemple en fonction de l'écoulement maximum résultant des possibilités du doseur. Un premier réglage peut être opéré au niveau de l'orifice d'admission $2d_2$.

Ce doseur comporte une vanne électro-magnétique 18 dont l'obturateur 18a obture ou libère en totalité la section de l'orifice 15. Cette vanne 18 est reliée à un système de temporisation réglable. Comme cela est représenté sur le dessin, la vanne 18 est disposée perpendiculairement à la paroi 16 du conduit.

Le fonctionnement d'un doseur selon l'invention est le suivant.

Le produit vierge, par exemple une résine est stocké dans la cuve 1 et s'écoule dans la chambre 1a. Le produit à doser, par exemple un colorant est contenu dans une trémie 3.

Ce colorant est également contenu par l'auge 2a.

Le moteur, par son arbre de sortie 7, entraîne en rotation à la même vitesse les deux vis coaxiales 9/10 fixées au manchon 8. La vitesse de rotation est d'environ 1 500 tours/minute.

Sous l'effet de la vis d'extraction 9, disposée à l'intérieur du tube 2d, le produit à doser, admis par l'orifice $2d_2$, est entraîné dans le sens des flèches F3. La paroi horizontale $2a_6$, disposée au-dessus dudit orifice $2d_2$ évite de surcharger la vis au droit de celui-ci et oblige le produit à adopter le circuit indiqué par la flèche F2.

Le réglage du débit est obtenu en manoeuvrant la molette 14 qui, mise en rotation dans un sens ou dans l'autre, tend à provoquer le déplacement latéral de l'obturateur 12 dans le but de régler l'ouverture de l'orifice d'admission $2d_2$.

Lorsque le produit arrive à l'extrémité $2d_1$ du tube 2d, il est repris par la grande vis 10 et adopte le circuit repéré par les flèches 4. Il est ainsi déplacé du côté de l'auge 2a pour être de nouveau repris par la vis 9 dans le sens de la flèche F3.

Tout au long de ce recyclage, une partie seulement du colorant passe par l'orifice d'écoulement 15, la quantité de produit déversée étant fonction de la section de la buse disposée au droit dudit orifice.

Le doseur selon l'invention peut être équipé d'un des dispositifs d'évacuation illustrés aux figures 2 et 3.

On se reporte maintenant aux figures 4, 5, 6 du dessin qui illustrent un autre mode de réalisation du dispositif selon l'invention, lequel est équipé pour obtenir le réglage du débit du produit par déplacement latéral en rotation de l'orifice d'écoulement 15.

Dans cette conception, le conduit 2b qui comporte l'orifice 15 est monté tournant dans l'auge 2a et est en appui à son autre extrémité sur un support 19. L'auge 2a comporte ainsi une collerette $2a_7$ s'étendant du côté du conduit 2b, laquelle est d'un diamètre légèrement supérieur au diamètre extérieur du conduit.

Celui-ci comporte à son extrémité $2b_1$ un bord rabattu à 90° $2b_3$, s'étendant sur sa périphérie. Un joint d'étanchéité 20 est inséré entre la paroi $2a_1$ de l'auge et le bord rabattu $2b_3$.

Le support 19 comporte une tôle cintrée 19a d'un diamètre légèrement supérieur à celui du conduit 2b, laquelle tôle 19a forme un berceau et est soudée à l'extrémité haute d'un piètement formé d'un fer plat 19b comportant à son autre extrémité une semelle 19c. Un voile de renfort 19d est soudé à la partie inférieure du berceau 19a, au plat 19b et à la semelle 19c.

Le conduit 2b comporte à proximité de la collerette $2a_7$ de l'auge une couronne dentée 21, laquelle est fixée à la périphérie externe du conduit. Cette couronne 21 coopère avec une vis sans fin 22. La denture de la couronne et de la vis est micrométrique de telle sorte que l'on puisse obtenir un réglage fin du dosage. La vis sans fin 22 est montée dans une chape 23 fixée à l'auge 2a. L'axe 22a de la vis 22 est fileté et comporte à son extrémité libre un bouton de commande moleté 22b. Un écrou 24, moleté à sa périphérie permet d'assurer le blocage de la vis sans fin 22 lorsque le conduit est mis dans la position désirée. Cet écrou est situé entre la chape 23 et le bouton 22b et peut être mis en appui ou éloigné de la chape 23.

L'orifice d'écoulement 15 (fig. 5) est déplacé de haut en bas ou inversement par la rotation du conduit 2b sous l'effet de l'ensemble couronne dentée 21/vis sans fin micrométrique 22 décrit précédemment, de telle sorte que l'orifice 15 peut être éloigné ou rapproché de la nappe de produit se déplaçant à la partie inférieure du conduit 2b.

Les positions extrêmes y/y' de l'orifice 15 sont représentées sur le dessin et l'angle de débattement $\alpha$ est de préférence de 30°. Toutefois la rotation du conduit 2b autour de son axe de révolution n'est pas limitée et il est donc possible d'obtenir des positions extrêmes y/y' formant un angle $\alpha$ supérieur ou inférieur à 30°, en restant dans les limites raisonnables pour un bon fonctionnement du dispositif.

Compte tenu de la conception de l'appareil et afin de permettre l'écoulement du produit dosé dans la goulotte, celle-ci est ouverte et évasée à sa partie supérieure 16e située en face de l'orifice 15, de telle sorte que quelle que soit la position dudit orifice, le produit soit toujours recueilli par la goulotte. Les parois latérales 16f sont échancrées en 16g et tangentent la face extérieure du conduit 2b.

On notera que l'écoulement du produit dosé pourrait également être obtenu au moyen d'un tube souple raccordé d'une part autour de l'orifice 15 et d'autre part autour d'un piquage fixé par exemple à la chambre de mélange 1a.

On se reporte maintenant aux figures 7 et 8 du dessin qui illustrent un autre mode de réalisation du dispositif selon l'invention.

Tel que cela est représenté sur le dessin, le conduit 2b est fixé à l'auge 2a au-dessus de laquelle est fixée la trémie 3.

L'ensemble est porté par deux piètements 24 fixés aux extrémités du conduit, à proximité de la bride 6 et de l'auge 2a.

Le conduit 2b comporte à sa partie inférieure une fente 25 pratiquée à la périphérie et dans le sens des génératrices du conduit. L'inclinaison de la fente 25 est comme celle de l'orifice 15 illustrée aux figures 1 à 3 du dessin, environ de 45° par rapport au plan vertical passant par l'axe longitudinal du dispositif.

Ladite fente 25 peut s'étendre sur tout ou partie du conduit 2b. Sur l'exemple illustré à la figure 7, elle s'étend de la partie médiane du conduit 2b jusqu'à proximité du piètement 24 situé à côté de l'auge 2a. Cette fente 25 est d'une largeur en relation avec la granulométrie du produit. Elle peut être de l'ordre de 1,5 à 10 mm.

Afin de permettre un dosage fin du produit, la fente peut être masquée en partie par une vanne 26 adaptée pour se déplacer devant elle. Cette vanne consiste en une tôle cintrée 26a selon un diamètre légèrement supérieur au diamètre extérieur du conduit 2b, laquelle tôle coulisse par ses extrémités latérales dans deux glissières courbes 26b appliquées et fixées sur la périphérie du conduit. En son milieu et à sa partie supérieure, la tôle 26a est reliée à un organe de commande micrométrique afin d'obtenir un réglage précis de la position de la vanne 26 par rapport à la fente 25.

Ledit organe de commande est articulé d'une part dans une chape 26c, fixée à la tôle 26a et d'autre part dans une autre chape 27 située à l'extrémité d'un support en console 28 fixé par exemple par soudure à la partie supérieure du conduit 2b.

La manoeuvre de la vanne est obtenue par une vis micrométrique 29 comportant un bouton moleté 29a à son extrémité supérieure. Son extrémité inférieure est montée à rotation libre sans pouvoir s'en dégager, dans une noix 30 articulée dans la chape 26c sur deux tourillons engagés dans les orifices de ladite chape.

La vis 29 coopère avec un écrou 31 monté d'une façon analogue à la noix 3 et comportant deux tourillons de part et d'autre engagés dans les orifices de la chape 27. Un écrou moleté 32 inséré entre l'écrou pivotant 31 et la bouton de commande 29a, permet de réaliser le blocage de la vis lorsque la tôle 26a est dans la position adéquate.

Dans ce mode de réalisation, le doseur selon l'invention trouve son application notamment comme dispositif saupoudreur.

On notera que la vanne peut être commandée par deux organes de commande disposés à ses extrémités afin d'éviter tout coincement lors de sa manoeuvre notamment si cette vanne est de grande longueur.

Bien entendu, sans sortir du cadre de l'invention, les parties du dispositif qui viennent d'être décrites à titre d'exemple pourront être remplacées par des parties équivalentes remplissant la même fonction.

## Revendications

1. Dispositif extracteur-doseur pour produits pulvérulents comportant une trémie (3) et des vis coaxiales (9/10) à pas de sens inversé, entraînées en rotation dans un conduit cylindrique (2b), lesquelles vis sont séparées l'une de l'autre par la paroi d'un tube (2d) coaxial aux vis et au conduit, la vis (9) de plus petit diamètre tournant à l'intérieur du tube (2d), pour véhiculer dans celui-ci le produit dans un sens et celle (10), de plus grand diamètre tournant à l'extérieur dudit tube (2d) pour véhiculer le produit dans le sens opposé, dans l'espace délimité entre le tube (2d) et le conduit (2b), celui-ci comportant à sa périphérie au moins un orifice (15) par lequel s'écoule le produit, caractérisé en ce que lesdites vis (9/10) sont réalisées à partir de fils enroulès en spirale à la manière d'un ressort, et en ce que le tube (2d) dans lequel est montée la vis (9) de plus petit diamètre, qui est la vis d'extraction, comporte à sa périphérie et du côté de la trémie (3), une ouverture (2d$_2$) d'admission du produit, devant laquelle s'étendent au moins en partie lesdites vis (9/10), lequel produit, après qu'il ait traversé ledit tube (2d) est repris par la vis (10) de plus grand diamètre et est transporté en sens inverse, et à l'extérieur du tube (2d), du côté de la trémie (3) pour exercer une pression constante au niveau de l'admission, dans le but d'éviter les effets de voûte au-dessus de l'ouverture d'admission (2d$_2$) et simultanément faire passer le produit par un orifice (15) situé à la périphérie du conduit (2b).

2. Dispositif selon la revendication 1 dont le conduit (2b) est sensiblement horizontal et prolonge une auge (2a) pouvant être fixée à la partie inférieure de ladite trémie (3), caractérisé en ce que le tube (2d), dans lequel est montée à rotation la vis (9) de plus petit diamètre se prolonge dans l'auge (2a) sur au moins une partie de sa longueur et que ladite ouverture d'admission (2d$_2$) peut être obturée en tout ou partie par une vanne (12) commandée de l'extérieur de l'auge (2a).

3. Dispositif selon la revendication 2, caractérisé en ce que le tube (2d), de petit diamètre s'étend sur au moins la totalité de la longueur de l'auge (2a), et que la vanne (12) se compose d'un obturateur cylindrique coaxial audit tube (2d) et monté coulissant dans celui-ci pour se déplacer devant l'ouverture d'admission (2d$_2$), lequel obturateur est commandé par un organe de préhension (14) auquel il est relié.

4. Dispositif selon la revendication 3, caractérisé en ce que l'obturateur (12) est creux pour recevoir l'extrémité libre de la vis (9) de plus petit diamètre, laquelle est montée tournante à l'intérieur dudit obturateur (12).

5. Dispositif selon l'une quelconque des revendications 1 à 4, caractérisé en ce que le conduit (2b) comporte un orifice calibré (15) à sa périphérie, est monté tournant par rapport à l'auge (2a) et comporte des moyens pour le faire pivoter autour de son axe de révolution afin de déplacer latéralement ledit orifice (15) et l'éloigner ou le rapprocher de la nappe de produit se déplaçant à la partie inférieure du conduit (2b).

6. Dispositif selon la revendication 5, caractérisé en ce que le conduit (2b) comporte une couronne dentée (21) fixée à sa périphérie, laquelle coopère avec une vis sans fin micrométrique (22), montée dans un support (23) fixé à l'auge (2a) et dont l'immobilisation temporaire est obtenue au moyen d'un écrou de blocage (24) mis en appui sur ledit support (23).

7. Dispositif selon l'une quelconque des revendications 1 à 6, caractérisé en ce que ledit orifice calibré (15) est disposé du côté de la partie inférieure du conduit (2b) et débouche dans une goulotte (16) qui déverse le produit dosé dans une chambre de mélange (1a).

8. Dispositif selon la revendication 7, caractérisé en ce que ladite goulotte (16) comporte en aval de l'orifice calibré (15), une ouverture (16b) pouvant être obturée par un volet articulé (16c) à deux positions, de telle sorte que dans une position, le volet (16c) obture l'ouverture (16b) pour que le produit s'écoule par la goulotte (16) dans la chambre de mélange (1a) et que dans la deuxième position, il obture la section du conduit (16) pour que le produit passe par ladite ouverture (16b) en vue de contrôler le débit du doseur.

9. Dispositif selon la revendication 7, caractérisé en ce que la goulotte (16) comporte en aval de l'orifice calibré (15) une vanne télécommannée (18) qui obture ou libère en totalité la section de l'orifice d'évacuation (15), laquelle vanne est reliée à un dispositif de temporisation.

10. Dispositif selon l'une quelconque des revendications 1 à 4, caractérisé en ce que le conduit (2b) comporte à sa périphérie et du côté de sa partie inférieure, une fente (25) s'étendant dans le sens de ses génératrices et sur au moins une partie de sa longueur afin de permettre la répartition du produit dosé s'écoulant au-dessous du dispositif.

11. Dispositif selon la revendication 10, caractérisé en ce que la fente (25) est masquée en tout ou partie par une vanne (26) se déplaçant devant elle, laquelle vanne est actionnée au moyen d'au moins un dispositif de commande par vis micrométrique (29) monté sur un support (28) fixé au conduit (2b) dont l'immobilisation temporaire est obtenue au moyen d'un écrou de blocage (32) mis en appui sur ledit support (28).

## Claims

1. Extractor-regulator device for pulverulent materials comprising a bin (3) and co-axial screws (9/10) with reverse pitch, driven in rotation in a cylindrical conduit (2b), which screws are separated one from the other by the wall of a tube (2d), co-axial to the said screws and conduit, the screw (9) with the smallest diameter turning inside the tube (2d) to carry the material therein in one direction and the screw (10) with the largest diameter turning outside said tube (2d) to carry the material in the opposite direction, inside the space defined between the tube (2d) and the conduit (2b), said latter comprising on its periphery at least one orifice (15) through which flows the said material, characterised in that the said screws (9/10) are made from spiral-wound wires, in spring-type manner, and in that the tube (2d) inside which is mounted the screw (9) with the smallest diameter, which is the extracting screw, comprises, on its periphery and on the side of the bin (3), and inlet (2d$_2$) for the material, before which inlet the said screws (9/10) are partly extending, the said material, after flowing through the said tube (2d), being picked up by the screw (10) with the largest diameter and being carried in the reverse direction, and out of the tube (2d), on the side of the bin (3) in order to exert a constant pressure at the inlet level and thus to avoid dome-effects above the inlet (2d$_2$) and to simultaneously direct the material through an orifice (15) situated on the periphery of the conduit (2b).

2. Device as claimed in claim 1 of which the conduit (2b) is substantially horizontal and extends a trough (2a) which can be fitted at the lower part of the said bin (3), characterised in that the tube (2d) inside which the screw (9) with the smallest diameter is mounted for rotation, extends inside the said trough (2a) over at least part of its length and in that the said inlet (2d$_2$) can be entirely or partly closed off by a valve (12) controlled from outside the trough (2a).

3. Device as claimed in claim 2, characterised in that the tube (2d), with the small diameter extends over the entire length of the trough (2a), and in that the valve (12) is composed of a cylindrical closing member co-axial to the said tube (2d) and mounted for sliding therein and for being shifted in front of the inlet (2d$_2$), which closing member is controlled by a holding member (14) to which it is connected.

4. Device as claimed in claim 3, characterised in that the closing member (12) is hollow to receive the free end of the screw (9) with the smallest diameter, which latter is mounted for pivoting inside the said closing member (12).

5. Device as claimed in any one of claims 1 to 4, characterised in that the conduit (2b) comprises an orifice (15) calibrated on its periphery, is mounted for pivoting with respect to the trough (2a) and comprises means to cause it to pivot about its rotating axis in order to move the said orifice (15) laterally away from or closer to the sheet of material moving at the lower part of the conduit (2b).

6. Device as claimed in claim 5, characterised in that the conduit (2b) comprises a toothed wheel (21) fitted on its periphery, which wheel cooperates with an endless micrometer screw (22), mounted inside a support (23) fixed to the trough (2a) which endless screw is temporarily immobilizable by means of a lock-nut (24) brought to rest on the said support (23).

7. Device as claimed in any one of claims 1 to 6, characterised in that the said calibrated orifice (15) is provided on the side of the lower part of the conduit (2b) and issues into a spout (16) which pours the dosed material into a mixing chamber (1a).

8. Device as claimed in claim 7, characterised in that the said spout (16) is provided downstream of the calibrated orifice (15) with an opening (16b) which can be closed off by a two-position hinged flap (16c), so that in one position, the flap (16c) closes off the opening (16b) to prevent the material from flowing through the spout (16) into the mixing chamber (1a) and so that in the second position, it closes off the section of the conduit (16) in order to direct the material through the said opening (16b) and thus to control the flow of the regulator.

9. Device as claimed in claim 7, characterised in that the spout (16) comprises downstream of the calibrated orifice (15) a remote-controlled valve (18) which either closes off or opens up the entire section of the outlet (15), which valve is connected to a timing device.

10. Device as claimed in any one of claims 1 to 4, characterised in that the conduit (2b) comprises on its periphery and on the side of its lower part, a slit (25) which extends in the direction of its generatrices and over at least part of its length in order to allow the distribution of the dosed material flowing from under the device.

11. Device as claimed in claim 10, characterised in that the slit (25) is entirely or only partly concealed by a shutter (26) which moves in front of said slit, which shutter is actuated by means of at least one control device using a micrometer screw (29), mounted on a support (28) fitted on the conduit (2b) and which is temporarily immobilizable by means of a lock-nut (32) brought to rest on the said support (28).

## Patentansprüche

1. Extraktions-Dosierungsvorrichtung für pulverförmige Stoffe mit einem Trichter (3) und koaxialen Schnecken (9/10) mit entgegengesetzten Gewinden, die in einer zylindrischen Leitung (2b) in Drehung versetzt werden, wobei diese Schnecken voneinander durch die Wand eines zu den Schecken und zur Leitung koaxial verlaufenden Rohres (2d) getrennt sind, wobei sich die Schnecke (9) mit dem kleinsten Durchmesser innerhalb des Rohres (2d) dreht, um in diesem den Stoff in eine Richtung zu befördern und sich die Schnecke (10) mit dem grössten Durchmesser ausserhalb des genannten Rohres (2d) dreht, um den Stoff in die entgegengesetzte Richtung zu befördern, in den zwischen Rohr (2d) und Leitung (2b) begrenzten Raum, wobei dieser an seiner Peripherie mindestens eine Offnung (15) aufweist, durch welche der Stoff fliesst, dadurch gekennzeichnet, dass die genannten Schnecken (9/10) aus federartig zu einer Spirale aufgerollten Drähten hergestellt sind und dass das Rohr (2d), in welchem die Schnecke (9) mit dem kleinsten Durchmesser, welche die Extraktionsschnecke ist, eingebaut ist, an seiner Peripherie und auf der Seite des Trichters (3) eine Einlassöffnung ($2d_2$) für den Stoff aufweist, vor der sich die genannten Schnecken (9/10) zumindestens teilweise erstrecken, wobei der Stoff, nachdem er das genannte Rohr (2d) durchlaufen hat, von der Schnecke (10) mit dem grössten Durchmesser wieder aufgenommen und in entgegengesetzter Richtung befördert wird, und zwar ausserhalb des Rohres (2d), auf de Seite des Trichters (3), um einen beständigen Druck am Einlassniveau auszuüben zwecks Vermeidung von Kuppel wirkungen über der Einlassöffnung ($2d_2$) und um gleichzeitig den Stoff durch eine an der Peripherie der Leitung (2b) liegenden Öffnung (15) laufen zu lassen.

2. Vorrichtung gemäss Anspruch 1, deren Leitung (2b) im wesentlichen horizontal ist und einen Trog (2a) verlängert, der am Unterteil des genannten Trichters (3) angebracht ist, dadurch gekennzeichnet, dass das Rohr (2d), in dem die Schnecke (9) mit dem kleinsten Durchmesser drehbar eingebaut ist, sich an mindestens einem Teil seiner Länge bis in den Trog (2a) erstreckt und dass die genannte Einlassöffnung ($2d_2$) ganz oder teilweise durch ein vom Trogäusseren (2a) gesteuertes Ventil (12) abgedichtet werden kann.

3. Vorrichtung gemäss Anspruch 2, dadurch gekennzeichnet, dass das Rohr (2d) mit kleinem Durchmesser sich mindestens über die gesamte Länge des Trogs (2a) erstreckt und dass das Ventil (12) aus einem zum genannten Rohr (2d) koaxial verlaufenden Verschlusselement besteht, das in dem Rohr gleitend angebracht ist, um sich vor der Einlassöffnung ($2d_2$) zu verschieben und das durch ein mit ihm verbundenen Greiforgan (14) gesteuert wird.

4. Vorrichtung gemäss Anspruch 3, dadurch gekennzeichnet, dass das Verschlusselement (12) hohl ist, um das freie Ende der Schnecke (9) mit dem kleinsten Durchmesser aufzunehmen, welches drehbar im Inneren des genannten Verschlusselements (12) eingebaut ist.

5. Vorrichtung gemäss einem der Ansprüche 1 bis 4, dadurch gekennzeichnet, dass die Leitung (2b) eine an ihrer Peripherie kalibrierte Öffnung (15) aufweist, gegenüber dem Trog (2a) drehbar angebracht ist und Mittel zur Drehung um ihre Drehachse aufweist, um die genannte Öffnung (15) seitlich zu verschieben und sie von der sich auf der Unterseite der Leitung (2b) bewegenden Stoffschicht zu entfernen oder ihr zu nähern.

6. Vorrichtung gemäss Anspruch 5, dadurch gekennzeichnet, dass die Leitung (2b) einen an ihrer Peripherie befestigten Zahnkranz (21) aufweist, der mit einer mikrometrischen Förderschnecke (22) zusammenwirkt, die auf einer an dem Trog (2a) befestigten Halterung (23) angebracht ist und deren vorrübergehender Stillstand mittels einer auf der genannten Halterung (23) gestützten Sperrschraube (24) bewirkt wird.

7. Vorrichtung gemäss einem der Ansprüche 1 bis 6, dadurch gekennzeichnet, dass die genannte kalibrierte Öffnung (15) auf der Seite des Unterteils der Leitung (2b) angebracht ist und in eine Rinne (16) einmündet, die den dosierten Stoff in eine Mischkammer (1a) schüttet.

8. Vorrichtung gemäss Anspruch 7, dadurch gekennzeichnet, dass die genannte Rinne (16) stromabwärts nach der kalibrierten Öffnung (15) eine Öffnung (16b) aufweist, die durch eine Schwenkklappe (16c) mit zwei Stellungen verschlossen werden kann, so dass die Klappe (16c) in einer Stellung die Öffnung (16b) verschliesst, damit der Stoff durch die Rinne (16) in die Mischkammer (1a) fliesst und dass sie in der zweiten Stellung den Querschnitt der Leitung (16) abdichtet, so dass der Stoff durch die genannte Öffnung (16b) fliesst zwecks Steuerung der Durchflussleistung des Dosierers.

9. Vorrichtung gemäss Anspruch 7, dadurch gekennzeichnet, dass die Rinne (16) stromabwärts nach der kalibrierten Öffnung (15) ein ferngesteuertes Ventil (18) aufweist, das den gesamten Querschnitt der Ausströmungsöffnung (15) absperrt oder frei macht, wobei das Ventil mit einer Verzögerungsvorrichtung verbunden ist.

10. Vorrichtung gemäss einem der Ansprüche 1 bis 4, dadurch gekennzeichnet, dass die Leitung (2b) an ihrer Peripherie und an ihrer Unterseite einen Spalt (25) aufweist, der sich in Richtung ihrer Generatrixen und auf mindestens einem Teil ihrer Länge erstreckt, um die Verteilung des dosierten, unter der Vorrichtung fliessenden Stoffes zu ermöglichen.

11. Vorrichtung gemäss Anspruch 10, dadurch gekennzeichnet, dass der Spalt (25) ganz oder teilweise von einem sich vor ihm verschiebenden Ventil (26) abgedeckt wird, welches mittels mindestens einer Steuervorrichtung durch eine Mikrometerschraube betätigt wird, wobei die Steuervorrichtung auf einer auf der Leitung (2b) befestigten Halterung (28) angebracht ist und ihr vorübergehender Stillstand mittels einer auf der genannten Halterung (28) gestützten Sperrschraube (32) bewirkt wird.

Fig. 1

0 006 073

Fig. 2

Fig. 3

2

Fig-4

1

3

6

2a1  20

2a7

2b3

2b1

9

10

20

21  22  23

2a

V

VII

1a

2b

2d

y'

y

15

16f

16

2

V

VII

19a

19

19b

19d

19c

3

0 006 073

Fig. 5

2b   16f   16e

1a

15

16g   y'

α

y

16

Fig. 6

9   10   2b

22b

23   22   23

24

4

Fig.7

29a
29
32
31
26a    26c    27    26
26b              26b

30

25    2

VIII

VIII

2b

5

33    33

3

2a

14

0006073

29a
29
32
28    31
27
2b    30
26c
26a
26b

Fig 8